# EUROPÄISCHE PATENTSCHRIFT

(11) **EP 0 915 733 B1**
(45) Veröffentlichungstag und Bekanntmachung des Hinweises auf die Patenterteilung: **30.11.2005**
(21) Anmeldenummer: 98913643.7
(22) Anmeldetag: 05.03.1998
(51) Int. Cl.: B01D 53/94

(54) **KATALYSATORSYSTEM ZUR ABGASREINIGUNG VON DIESELMOTOREN**
CATALYTIC CONVERTER SYSTEM FOR DIESEL ENGINE EMISSION CONTROL
SYSTEME CATALYSEUR POUR L'EPURATION DES GAZ D'ECHAPPEMENT DE MOTEURS DIESEL

(30) Priorität: 06.03.1997 DE 19709102
(43) Veröffentlichungstag der Anmeldung: 19.05.1999
(73) Patentinhaber: Umicore AG & Co. KG, 63457 Hanau-Wolfgang (DE)
(72) Erfinder: MÜLLER, Wilfried, D-61184 Karben (DE); LEYRER, Jürgen, D-79618 Rheinfelden (DE); DOMESLE, Rainer, D-63755 Alzenau (DE); OSTGATHE, Klaus, D-55129 Mainz (DE); LOX, Egbert, D-63457 Hanau (DE); KREUZER, Thomas, D-61184 Karben (DE)
(74) Vertreter: Stellbrink, Axel
(86) Internationale Anmeldenummer: PCT/EP1998/001234
(87) Internationale Veröffentlichungsnummer: WO 1998/039083

(56) Entgegenhaltungen:
- EP-A- 0 605 991
- WO-A-96/39244
- DE-A- 4 244 511
- US-A- 3 998 599
- US-A- 5 556 604

## Beschreibung

Die vorliegende Erfindung betrifft ein Katalysatorsystem für die Reinigung der Abgase von Dieselmotoren.

Das Abgas von Dieselmotoren weist während der normalen Betriebsphasen neben unverbrannten Kohlenwasserstoffen (HC), Kohlenmonoxid (CO) und Stickoxiden (NOₓ) einen hohen Anteil von 3 bis 10 Vol.-% Sauerstoff auf. Wegen des überstöchiometrischen Gehaltes des Abgases an Sauerstoff ist es nicht möglich, alle drei Schadstoffe nach dem bei Otto-Motoren üblichen Dreiwege-Verfahren gleichzeitig umzusetzen. Otto-Motoren werden gewöhnlich mit Luftzahlen λ nahe um 1 herum betrieben, während Dieselmotoren mit Luftzahlen von über 1,2 arbeiten. Die Luftzahl λ ist das auf den stöchiometrischen Betrieb normierte Luft/Kraftstoffverhältnis (Kilogramm Luft/Kilogramm Kraftstoff).

Die Zusammensetzung des Abgases von Dieselmotoren ist sehr von der jeweiligen Betriebsphase des Motors abhängig. In der Kaltstartphase, das heißt während der ersten 60 bis 120 Sekunden nach Start des Motors, weist das Abgas einen hohen Gehalt an Kohlenwasserstoffen auf - die Stickoxidkonzentration ist noch gering. Bei längerer Betriebsdauer und höherer Last des Motors nimmt die Emission unverbrannter Kohlenwasserstoffe ab und die Emission von Stickoxiden zu.

Die unverbrannten Kohlenwasserstoffe und Kohlenmonoxid im Dieselabgas können relativ leicht durch Oxidationskatalysatoren umgesetzt werden.

Ein solcher Katalysator wird zum Beispiel in der DE 39 40 758 C2 beschrieben. Es handelt sich um einen Oxidationskatalysator mit hohen Umsetzungsraten für Kohlenwasserstoffe und Kohlenmonoxid und gehemmter Oxidationswirkung gegenüber Stickoxiden und Schwefeldioxid. Der Katalysator läßt Stickoxide nahezu unbeeinflußt passieren.

Die Stickoxide können wegen des hohen Sauerstoffgehaltes im Dieselabgas nur mit speziellen Reduktionskatalysatoren umgesetzt werden. Dabei gilt grundsätzlich, daß diese Reduktionskatalysatoren auch eine gute Oxidationswirkung gegenüber Kohlenmonoxid und Kohlenwasserstoffen aufweisen.

Die Umsetzungsraten eines Reduktionskatalysators für die einzelnen Schadstoffkomponenten sind stark von der Abgastemperatur abhängig. Mit steigender Abgastemperatur setzt zunächst die Oxidation der Kohlenwasserstoffe und des Kohlenmonoxids ein und erreicht innerhalb eines Temperaturintervalls von etwa 150 bis 175°C Oxidationsraten von über 70 %. Bei weiter steigender Temperatur bleibt die Umsetzung der Kohlenwasserstoffe nahezu konstant. Die Abgastemperatur, bei der eine Umsetzungsrate von 50 % für den jeweiligen Schadstoff erreicht wird, wird als die Anspringtemperatur für diesen Schadstoff bezeichnet.

Die Umsetzungsrate für Stickoxide folgt der Umsetzungsrate der Kohlenwasserstoffe. Sie steigt jedoch nicht monoton an, sondern durchläuft bei Temperaturen, bei denen die Oxidation der Kohlenwasserstoffe nahezu ihren Maximalwert erreicht hat, ein Maximum und fällt dann mit steigender Temperatur wieder bis auf nahezu Null ab. Optimale Umsetzungsraten für die Stickoxide werden also nur in einem schmalen Temperaturfenster erreicht. Dabei werden die im Abgas vorhandenen Kohlenwasserstoffe und Kohlenmonoxid als Reduktionsmittel benötigt.

Die Umsetzungskurven für die einzelnen Schadstoffe hängen sehr von der Formulierung des jeweiligen Katalysators ab. Das gilt auch für die Stickoxide: Lage und Breite des Temperaturfensters sowie der in diesem Fenster maximal erreichbare Umsetzungsgrad hängen von der Katalysatorformulierung ab. Es sind sogenannte Niedrigtemperatur-Katalysatoren bekannt, die ihre maximale Stickoxidumsetzung bei Temperaturen zwischen 200 und 250°C erreichen. Bei Hochtemperatur-Katalysatoren liegt das Maximum der Stickoxidumsetzung oberhalb von 300°C.

Stand der Technik sind Reduktionskatalysatoren mit einer maximalen Stickoxidumsetzung im sauerstoffhaltigen Dieselabgas von über 55 % bei einer Temperatur von etwa 200°C. Die Halbwertsbreite der Umsetzungskurve für die Stickoxide beträgt etwa 100°C.

Solche Katalysatoren werden zum Beispiel in "Design Aspects of Lean NOₓ-Catalysts for Gasoline and Diesel Engine Applications" von Leyrer et al. in SAE No. 952495, 1995 und in "Catalytic reduction of NOₓ with hydrocarbons under lean diesel exhaust gas conditions" von Engler et al. in SAE No. 930735, 1993 beschrieben. Es werden Katalysatoren auf Basis von Zeolithen eingesetzt, die mit verschiedenen katalytisch aktiven Metallen (zum Beispiel Kupfer oder Platin) ausgetauscht sein können. Weitere Reduktionskatalysatoren werden in der noch nicht veröffentlichten Patentanmeldung DE 196 14 540.6 beschrieben.

Die starke Temperaturabhängigkeit der Umsetzungsraten für die Stickoxide stellt ein großes Problem bei der Reinigung von Dieselabgasen dar, da die Motoraustrittstemperatur der Abgase von Dieselfahrzeugen im Betrieb je nach Fahrbedingungen zwischen etwa 100 und 600°C schwanken kann. Hohe Umsetzungsraten liegen deshalb nur während kurzer Betriebsphasen vor, während derer die Abgastemperatur im optimalen Bereich des verwendeten Katalysators liegt.

Aus der DE 40 32 085 A1 ist eine Katalysatoranordnung zur Reduktion von Stickoxiden in einem Abgas, das in einem weiten Abgastemperaturbereich anfällt, bekannt. Die Anordnung besteht aus wenigstens zwei Katalysatorbetten, die unmittelbar hintereinander angeordnet sind und aus unterschiedlichen Katalysatormaterialien bestehen, die ihre stärkste katalytische Wirkung in unterschiedlichen, benachbarten Teilbereichen des Abgastemperaturbereiches aufweisen. Das Katalysatorbett, dessen Wirkungsoptimum in einem höheren Temperaturbereich liegt, ist in Strömungsrichtung vor dem anderen Katalysatorbett angeordnet.

Weiterhin ist aus der DE 39 40 758 C2 die Abgasreinigung von Dieselmotoren unter Verwendung von Oxidationskatalysatoren bekannt. Aus Platzgründen wird dabei häufig das notwendige Katalysatorvolumen auf einen Katalysator im Motorraum und einen Katalysator im Unterbodenbereich aufgeteilt. Ebenso ist die Verwendung von Reduktionskatalysatoren bekannt. Zur Verbesserung der Stickoxidumsetzung wird häufig vor den Katalysator zusätzlich Dieselkraftstoff als Reduktionsmittel in das Abgas eingedüst.

Die DE 36 42 018 beschreibt eine solche Anordnung. Um das bei der Stickoxid-Umsetzung nicht verbrauchte Kohlenmonoxid oder auch den überschüssigen Kohlenwasserstoff durch Oxidation zu beseitigen, kann dem Reduktionskatalysator ein zweiter Katalysator nachgeschaltet werden, der als einfacher Oxidationskatalysator ausgebildet sein kann.

EP 0 605 991 A1 beschreibt ein zweistufiges Katalysatorsystem für einen Magermotor. Das Katalysatorsystem besteht aus zwei Reduktionskatalysatoren, von denen der erste die Stickoxide in einem Bereich zwischn 400 und 700°C reduziert, während der zweite die Stickoxide bei niedrigen Temperaturen zwischen 300 und 600°C reduziert.

WO 96/39244 A1 offenbart ein Katalysatorsystem für Dieselabgase, welches einen Stickoxid-Reduktionskatalysator und einen Adsorber für unverbrannte Kohlenwasserstoffe enthält. Bei Betriebsphasen des Dieselmotors mit niedrigen Abgastemperaturen adsorbiert der Adsorber die im Abgas enthaltenen unverbrannten Kohlenwasserstoffe und gibt sie bei Betriebsphasen mit höheren Abgastemperaturen wieder frei. Hierdurch kann der StickoxidUmsatz des Stickoxid-Reduktionskatalysators verbessert werden.

Mit den bekannten Katalysatorsystemen können Kohlenwasserstoffe und Kohlenmonoxid gut umgesetzt werden. Die Stickoxidumsetzung ist jedoch noch unzureichend. Sie erreicht nur während bestimmter Betriebsphasen des Motors zufriedenstellende Werte.

Aufgabe der vorliegenden Erfindung ist es, ein Katalysatorsystem zur Verfügung zu stellen, welches über einen breiten Bereich der Betriebszustände eines Dieselmotors eine optimale Umsetzung für alle Schadstoffe des Dieselabgases aufweist.

Diese Aufgabe wird durch ein Katalysatorsystem für die Reinigung der Abgase eines Dieselmotors mit den Merkmalen der Ansprüche gelöst. Das erfindungsgemäße Katalysatorsystem aus einem ersten und einem zweiten Katalysator, die in einer Abgasreinigungsanlage hintereinander angeordnet sind, ist dadurch gekennzeichnet, daß es sich bei beiden Katalysatoren um Reduktionskatalysatoren handelt, von denen der erste motornah in einem Bereich der Abgasreinigungsanlage angeordnet ist, in dem die Abgastemperatur bei Vollast des Motors Temperaturen von über 200 bis über 300°C erreicht, und der zweite Katalysator motorfern angeordnet ist, wobei in diesem motorfernen Bereich der Abgasreinigungsanlage die Abgastemperatur bei Vollast des Motors innerhalb des Temperaturfensters des zweiten Katalysators liegt.

In diesem motorfernen Bereich der Abgasreinigungsanlage erreicht die Abgastemperatur Werte von maximal 500°C.

Als zweiter Reduktionskatalysator wird ein solcher mit einem Maximum der Stickoxidreduktion bei einer Temperatur gewählt, die oberhalb der Temperatur für das Maximum der Stickoxidreduktion des ersten Katalysators liegt.

In einer bevorzugten Ausführungsform weist der erste Katalysator einen oder mehrere Bereiche mit geringerer katalytischer Aktivität als der Rest des Katalysators auf, die bei Vollast des Motors einen Schlupf von nicht umgesetzten Kohlenwasserstoffen und Kohlenmonoxid zulassen.

Der erste Katalysator sollte erfindungsgemäß möglichst niedrige Anspringtemperaturen für die Schadstoffkomponenten aufweisen. In Kombination mit dem motornahen Einbau ist er daher in der Lage, die Schadstoffe schon sehr frühzeitig während der Kaltstartphase umzusetzen. Dabei wird allerdings sein Temperaturfenster für die Umsetzung der Stickoxide sehr schnell durchfahren. Am Ende der Kaltstartphase werden Kohlenwasserstoffe und Kohlenmonoxid vom ersten Katalysator fast vollständig umgesetzt. Die Umsetzungsrate für die Stickoxide ist allerdings wegen der jetzt hohen Abgastemperaturen von bis zu 600°C im Vollastbetrieb auf nahezu Null abgefallen.

Um auch in diesem Betriebszustand eine gute Umsetzung für die Stickoxide zu erhalten, wird erfindungsgemäß ein zweiter Reduktionskatalysator motorfern in die Abgasanlage eingebaut. Der Einbau wird dabei in einem Bereich der Abgasanlage vorgenommen, in dem die Abgastemperatur auch bei Vollast des Motors Temperaturen bis maximal 500°C nicht übersteigt. Die Erfindung nutzt die bekannte Tatsache, daß das Abgas beim Durchströmen der Abgasleitung abgekühlt wird..Bei einer Abgastemperatur von 600°C kann mit einem Temperaturverlust von etwa 50 bis 100°C pro Meter Abgasleitung gerechnet werden. Erfindungsgemäß wird der zweite Reduktionskatalysator in einem Bereich der Abgasanlage angeordnet, in dem die Abgastemperatur im Dauerbetrieb und bei Vollast im Temperaturfenster für die Stickoxidumsetzung des zweiten Katalysators liegt. Zur Erreichung dieses Zieles kann es notwendig sein, das Abgas durch auf das Abgasrohr aufgeschweißte Kühlrippen forciert zu kühlen. Ist aus Einbaugründen ein sehr langes Abgasrohr zwischen beiden Katalysatoren notwendig, so kann es umgekehrt auch erforderlich sein, das Abgasrohr mit einer Wärmeisolierung zu versehen, um eine zu starke Abkühlung des Abgases zu verhindern.

Die tatsächlich am zweiten Katalysator einzustellende Abgastemperatur hängt natürlich von der für den zweiten Katalysator gewählten Katalysatorformulierung und der Lage seines Temperaturfensters für die Stickoxidumsetzung ab. Die zuvor genannte Temperatur von maximal 500°C ist dementsprechend nur als Richtwert zu verstehen.

Im Dauer- und Vollastbetrieb des Dieselmotors werden Kohlenmonoxid und Kohlenwasserstoffe fast vollständig vom ersten Katalysator umgesetzt, die Stickoxide passieren in diesem Betriebszustand den Katalysator dagegen unverändert. Ohne weitere Maßnahmen kann jedoch auch der zweite Reduktionskatalysator die Stickoxide nicht umsetzen, da Kohlenmonoxid und Kohlenwasserstoffe schon am ersten Katalysator umgesetzt wurden und jetzt als Reduktionsmittel im Abgas fehlen. Daher wird in einer bevorzugten Ausführungsform der Erfindung vorgesehen, den ersten Reduktionskatalysator mit Bereichen verminderter katalytischer Aktivität gegenüber den restlichen Bereichen auszustatten, um so auch bei hohen Abgastemperaturen für einen gewissen Schlupf von nicht umgesetzen Kohlenwasserstoffen und Kohlenmonoxid zu sorgen, die für den zweiten Reduktionskatalysator als Reduktionsmittel dienen.

Im einfachsten Fall kann dieser Bereich mit verminderter katalytischer Aktivität aus einer Durchgangsbohrung im ersten Katalysator bestehen. Alternativ dazu ist es möglich, diese Bereiche mit verminderter katalytischer Aktivität als einen ringförmigen Bereich an der Peripherie des ersten Katalysators vorzusehen. Ebenso sind segmentförmige oder sektorförmige Bereiche mit verminderter katalytischer Aktivität möglich. Das Volumen dieser Bereiche im Verhältnis zum Gesamtvolumen des ersten Reduktionskatalysators muß so abgestimmt werden, daß der Schlupf an nicht umgesetzten Kohlenwasserstoffen und Kohlenmonoxid eine ausreichende Menge an Reduktionsmittel für die Umsetzung der Stickoxide am zweiten Reduktionskatalysator darstellt.

In einer bevorzugten Ausführungsform der Erfindung werden die Bereiche mit verminderter katalytischer Aktivität des ersten Reduktionskatalysators mit einem Adsorber für Kohlenwasserstoffe versehen. Zu Beginn der Kaltstartphase werden hier die Kohlenwasserstoffe adsorbiert und erst zeitverzögert durch die steigenden Abgastemperaturen wieder desorbiert. Zu diesem Zeitpunkt ist der nachgeschaltete zweite Reduktionskatalysator schon in der Lage, die desorbierten Kohlenwasserstoffe zumindest teilweise umzusetzen.

Eine weitere Verbesserung kann erzielt werden, wenn die Bereiche mit geringerer katalytischer Aktivität mit einem geringen Anteil an katalytisch aktiven Komponenten versehen sind. Dieser Anteil kann so bemessen sein, daß die Konzentration an katalytisch aktiven Komponenten in diesen Bereichen 0 bis 20 % der Konzentration in den übrigen Bereichen des Katalysators betragen.

Als Katalysatorformulierungen können die im Stand der Technik besprochenen Katalysatorformulierungen verwendet werden. Der erste Katalysator sollte dabei möglichst niedrige Anspringtemperaturen und damit auch ein Temperaturfenster für die Stickoxidumsetzung bei möglichst niedrigen Temperaturen aufweisen. Anspringtemperaturen und Temperaturfenster des zweiten Katalysators, sowie die Abgastemperatur am Ort des zweiten Katalysators während des Dauer- und Vollastbetriebes müssen so aufeinander abgestimmt werden, daß während dieser Betriebsphasen eine optimale Umsetzung der Stickoxide erzielt wird. Hierfür stehen dem Fachmann verschiedene Katalysatorformulierungen sowie die Möglichkeit zur Verfügung, die Abgastemperatur am Ort des zweiten Reduktionskatalysators durch konstruktive Maßnahmen in das für die jeweils verwendete Katalysatorformulierung optimale Temperaturfenster zu legen.

Die Bereiche mit verminderter katalytischer Aktivität im ersten Reduktionskatalysator können zum Beispiel bei Verwendung von wabenförmigen Katalysatorträgern durch Verstopfen der Durchflußkanäle in den vorgesehenen Bereichen vor Beschichten des Katalysatorträgers mit der katalytisch aktiven Beschichtung erhalten werden. Als Verstopfungsmaterial wird ein Material gewählt, welches bei der Calcinierung der Beschichtung rückstandslos verbrennt. Weiterhin ist es möglich, die vorgesehenen Bereiche mit verminderter katalytischer Aktivität vor dem Beschichten abzudecken. Falls der notwendige Schlupf von nicht umgesetzen Kohlenwasserstoffen und Kohlenmonoxid durch ein Loch im Katalysatorkörper erfolgen soll, kann dies schon bei der Substratherstellung berücksichtigt werden, oder das Loch kann vor dem Beschichten aus dem Katalysatorträger ausgebohrt werden.

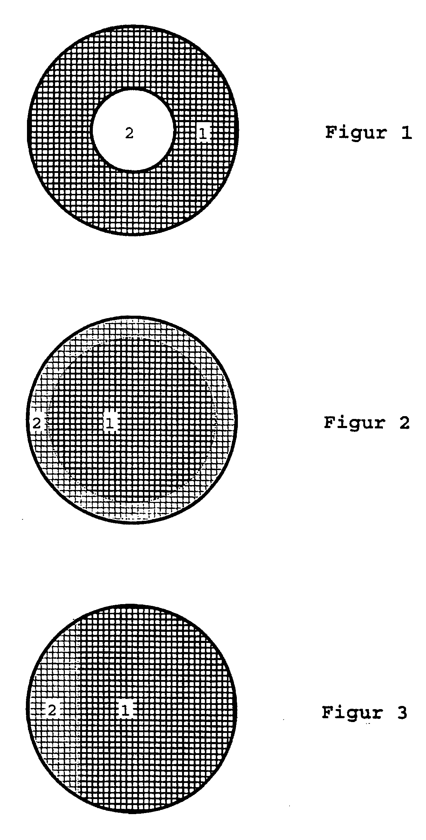

In den Figuren 1 bis 3 sind verschiedene Ausführungsformen für die Bereiche mit verminderter katalytischer Aktivität des ersten Reduktionskatalysators dargestellt. Die Figuren zeigen jeweils die Aufsicht auf die Eintrittsfläche eines wabenförmigen Katalysators, der von parallelen Abgaskanälen durchzogen ist. Bezugsziffer 1 bezeichnet die katalytisch aktiven Bereiche des Katalysators, das heißt in diesen Bereichen sind die Innenwände der Abgaskanäle mit einer katalytisch aktiven Beschichtung versehen. Mit Bezugsziffer 2 sind die Bereiche des Katalysators mit verminderter katalytischer Aktivität bezeichnet. Im Falle von Figur 1 handelt es sich dabei um eine zentrale Durchgangsbohrung. In Figur 2 ist der Bereich mit verminderter katalytischer Aktivität als ringförmiger Bereich an der Peripherie des Katalysatorkörpers ausgebildet. In diesem Bereich können die Innenwände der Abgaskanäle beschichtungsfrei ausgeführt oder mit einer Adsorberbeschichtung für Kohlenwasserstoffe versehen sein. Dieser Bereich kann aber auch katalytisch aktive Komponenten in einer Konzentration von 0 bis 20 % der Konzentration der katalytisch aktiven Komponenten im Bereich 1 aufweisen. Die katalytisch aktiven Komponenten in Bereich 2 müssen nicht notwendigerweise mit den katalytisch aktiven Komponenten in Bereich 1 identisch sein.

Figur 3 zeigt den Bereich mit verminderter katalytischer Aktivität in Form eines Segmentes. Die konkrete Formgebung für die Bereiche mit verminderter katalytischer Aktivität ist von untergeordneter Bedeutung. Wesentlich ist nur, daß der Querschnitt dieser Bereiche so bemessen wird, daß während des Dauer- und Vollastbetriebes ein ausreichender Schlupf von nicht umgesetzten Kohlenwasserstoffen und Kohlenmonoxid für die Reduktion der Stickoxide am zweiten Reduktionskatalysator möglich ist.

### Beispiel

In diesem Beispiel wird der Aufbau des Katalysatorsystems für einen 2,2 1 direkt einspritzenden Dieselmotor beschrieben.
1. Reduktionskatalysator
Ein Wabenkörper aus Cordierit mit 62 Zellen beziehungsweise Strömungskanälen pro cm², einer Wandstärke der Strömungskanäle von 0,2 mm, einem Durchmesser von 125 mm und einer Länge von 180 mm entsprechend einem Volumen von 2,2 l wurde bis auf einen äußeren ringförmigen Bereich von 5 mm Breite mit einer katalytischen Beschichtung entsprechend den Beispielen 1, 9 und 17 aus der Patentanmeldung DE 196 14 540 versehen.
Bei den Reduktionskatalysatoren dieser Patentanmeldung handelt es sich um solche, die in Form einer Beschichtung auf Katalysatorträger aufgebracht werden. Die Katalysatormasse gemäß der DE 196 14 540 enthält eine Mischung aus insgesamt fünf verschiedenen Zeolithen mit unterschiedlichen Modulen X (Molverhältnis SiO₂ : Al₂O₃). Weiterhin enthält die Mischung ein mit Platin aktiviertes Aluminiumsilikat, welches einen Gehalt an Siliziumdioxid von 5 Gew.-% bezogen auf das Gesamtgewicht des Aluminiumsilikats aufweist. Die spezifische Oberfläche dieses Materials beträgt im frischen Zustand etwa 286 m²/g. Es weist eine sehr homogene Elementverteilung von Silizium und Aluminium auf. Seine Kristallstruktur ist im Gegensatz zu der der Zeolithe böhmitisch. Die Herstellung eines solchen Aluminiumsilikates wird in der Patentschrift DE 38 39 580 C1 beschrieben.
Für die Herstellung des ersten Reduktionskatalysators wurde gemäß der DE 196 14 540 wie folgt vorgegangen:
Zunächst wurde das Aluminiumsilikat mit Platin aktiviert. Hierzu wurde es mit einer wäßrigen Lösung von Tetraamminpiatin(II)-hydroxid unter ständigem Rühren in Kontakt gebracht, so daß ein feuchtes Pulver entstand. Nach zweistündiger Trocknung bei 120°C an Luft wurde das entstandene Pulver für 2 h bei 300°C an Luft calziniert. Anschließend erfolgte die Reduktion im Formiergasstrom (95 Vol.-% N₂ und 5 Vol.-% H₂) bei 500°C für die Dauer von 2 h. Das so hergestellte Pt-Aluminiumsilikatpulver enthielt bezogen auf sein Gesamtgewicht 0,15 Gew.-% Platin.
Aus dem vorgefertigten Pt-Aluminiumsilikatpulver wurde eine wäßrige Beschichtungsdispersion mit 40 %igem Feststoffanteil angesetzt. Zu dieser wurden folgende Zeolithpulver im Verhältnis 1:1:1:1:1 zugegeben: DAY (X = 200); Na-ZSM5 (X > 1000); H-ZSM5 (X = 120); H-ZSM5 (X = 40); H-Mordenit (X = 20).
Die genaue Zusammensetzung der Beschichtungsdispersion zeigt Tabelle 1.

**Tabelle 1:**

| Zusammensetzung der Beschichtungsdispersion | | |
|---|---|---|
| **Rohstoff** | | **Zusammensetzung [Gew.-%]** |
| Pt-Aluminiumsilikat | | 67 |
| H-Mordenit | (x = 20) | 6,6 |
| H-ZSM5 | (x = 40) | 6,6 |
| H-ZSM5 | (x = 120) | 6,6 |
| DAY | (x > 200) | 6,6 |
| Na-ZSM5 | (x > 1000) | 6,6 |

Der eingangs beschriebene Wabenkörper wurde durch Eintauchen in die Beschichtungsdispersion mit einer Menge von 180 Oxiden pro Liter Wabenkörpervolumen beschichtet. Die Beschichtung wurde bei 120°C an Luft getrocknet und abschließend für 2 h bei 500°C calciniert. Der beschichtete Wabenkörper enthielt pro Liter Wabenkörpervolumen 0,18 g Platin.
Anschließend wurde der Wabenkörper zusätzlich auf 30 % seiner Länge mit einer weiteren Katalysatormasse beschichtet. Im Unterschied zur ersten Katalysatormasse wurde das Aluminiumsilikat im zweiten Fall mit 2,06 Gew.-% Platin aktiviert. Nach der zweiten Beschichtung wurde der Wabenkörper wie schon nach der ersten Beschichtung getrocknet und calciniert. Der fertige Katalysator enthielt aufgrund der ersten Beschichtung 180 g Oxide pro Liter Katalysatorvolumen mit einer Platin-Konzentration von 0,18 g/l. Die Masse der Oxide der zweiten Beschichtung betrug 39 g mit einem Absolutgehalt an Platin von 0,8 g.
Der so hergestellte Katalysator enthält längs der Strömungsrichtung des Abgases unterschiedliche Beschichtungsmengen. Dies führt längs des Katalysators zu etwas gegeneinander verschobenen Temperaturfenstern für die Reduktion der Stickoxide. Für die Zwecke der Erfindung ist jedoch nur das durch Messung der Schadstoffumsetzung am kompletten Katalysator zugängliche integrale Temperaturfenster für die Reduktion der Stickoxide maßgebend. Die Variation des Temperaturfensters längs des Katalysators ist für die Erfindung von geringer Bedeutung. Im Rahmen dieser Erfindung wird daher unter "Temperaturfenster" stets nur das Temperaturfenster des gesamten Katalysators verstanden.
Das Temperaturfenster für die Umsetzung der Stickoxide des Katalysators lag zwischen 180 und 250°C mit einem Maximalwert für die Stickoxidumsetzung unter optimalen Bedingungen von 55 % bei 200°C.
2. Reduktionskatalysator
Für den zweiten Reduktionskatalysator wurde ein Cordierit-Wabenkörper derselben Bauart wie im ersten Fall mit nur 1,8 Liter Volumen verwendet. Dieser Wabenkörper wurde in derselben Weise wie der erste Wabenkörper beschichtet, mit dem Unterschied, daß die zusätzliche Beschichtung von beiden Stirnflächen des Wabenkörpers ausgehend auf jeweils 15 % der Gesamtlänge des Wabenkörpers aufgebracht wurde. Außerdem wurde der gesamte Wabenkörper beschichtet. Das Temperaturfenster dieses Katalysators lag zwischen 220 und 300°C mit einem Maximalwert für die Stickoxidumsetzung unter optimalen Bedingungen von 60 % bei 280°C.

### Anwendungsbeispiel:

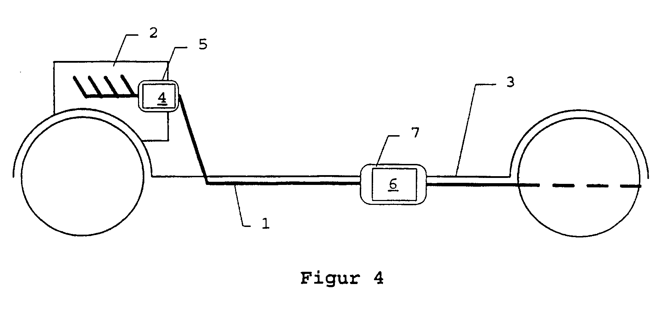

Die beiden Katalysatoren wurden in die Abgasanlage eines 2,2 1 Dieselfahrzeugs gemäß dem in Figur 4 gezeigten Schema eingebaut. Der erste Reduktionskatalysator (4) wurde dicht hinter dem Motorauslaß in einem Gehäuse (5), der zweite Reduktionskatalysator (6) in einem Gehäuse (7) im Unterbodenbereich (3) des Fahrzeugs angeordnet.

Mit dieser Abgasanlage wurden die Stickoxid-Umsätze während des sogenannten neuen Europafahrzyklusses (MVEG-A Fahrzyklus; EWG-Richtlinie 70/220 EWG) gemessen. Dieser Fahrzyklus umfaßt 4 innerstädtische Fahrzyklen mit einer Durchschnittsgeschwindigkeit von 34 km/h und einen außerstädtischen Fahrzyklus mit einer Maximalgeschwindigkeit von 120 km/h. Die gesamte Dauer des MVEG-A-Zyklusses beträgt 1180 Sekunden.

Hinter dem motornahen Katalysator wurden während der 4 innerstädtischen Fahrzyklen ansteigende Abgastemperaturen zwischen 80 und 180°C gemessen. Während des außerstädtischen Fahrzyklus stieg diese Temperatur auf Werte zwischen 270 und 300°C.

Der über den gesamten MVEG-A-Zyklus gemittelte Umsatz für die Stickoxide betrug 35 %.

In einer weiteren Meßreihe wurde der motornahe Reduktionskatalysator durch einen gleich großen Katalysator ersetzt, der über seinen gesamten Querschnitt mit der für den ersten Katalysator beschriebenen Beschichtung versehen war. Dieser Katalysator besaß also keine beschichtungsfreie Ringzone. Der mit diesem System gemessene mittlere Umsatz für die Stickoxide betrug 28 %. Er war geringer als bei der ersten Meßreihe, da besonders beim außerstädtischen Fahrzyklus mit seinen hohen Abgastemperaturen die Kohlenwasserstoffe nicht mehr im ausreichenden Maße den ersten Katalysatoren passieren können, wie es für eine optimale Reduktion der Stickoxide am zweiten Katalysator notwendig gewesen wäre. Trotzdem wurde auch mit diesem System über den MVEG-A-Zyklus noch ein befriedigender Umsatz der Stickoxide erzielt.

Die Ergebnisse der beiden Untersuchungen sind nochmals in der folgenden Tabelle zusammengefaßt.

| **Katalysatorsystem** | **Stickoxidumsatz** |
|---|---|
| 1. Reduktionskatalysator mit beschichtungsfreier Ringzone | 35 % |
| 1. Reduktionskatalysator ohne beschichtungsfreie Ringzone | 28 % |

## Patentansprüche

1. Katalysatorsystem für die Reinigung der Abgase eines Dieselmotors (2; Figur 4) aus einem ersten (4; Figur 4) und einem zweiten (6; Figur 4) Katalysator, die in einer Abgasreinigungsanlage (1; Figur 4) hintereinander angeordnet sind,
**dadurch gekennzeichnet,**
**daß** es sich bei beiden Katalysatoren um Reduktionskatalysatoren handelt, von denen der erste (4; Figur 4) motornah in einem Bereich der Abgasreinigungsanlage angeordnet ist, in dem die Abgastemperatur bei Vollast des Motors Temperaturen von über 200 bis über 300°C erreicht, und der zweite Katalysator (6; Figur 4) motorfern angeordnet ist, wobei in diesem motorfernen Bereich der Abgasreinigungsanlage die Abgastemperatur bei Vollast des Motors innerhalb des Temperaturfensters des zweiten Katalysators (6; Figur 4) liegt, und das Maximum der Stickoxidreduktion des ersten Katalysators (4; Figur 4) bei niedrigeren Temperaturen liegt als das Maximum der Stickoxidreduktion des zweiten Katalysators (6; Figur 4).

2. Katalysatorsystem nach Anspruch 1,
**dadurch gekennzeichnet,**
**daß** der erste Katalysator (4; Figur 4) einen oder mehrere Bereiche mit geringerer katalytischer Aktivität als der Rest des Katalysators aufweist, die bei Vollast des Motors einen Schlupf von nicht umgesetzten Kohlenwasserstoffen und Kohlenmonoxid zulassen.

3. Katalysatorsystem nach Anspruch 2,
**dadurch gekennzeichnet,**
**daß** die Bereiche mit geringerer katalytischer Aktivität aus einer im ersten Katalysator (4; Figur 4) zentral angeordneten Durchgangsbohrung (2; Figur 1) bestehen.

4. Katalysatorsystem nach Anspruch 2,
**dadurch gekennzeichnet,**
**daß** die Bereiche mit geringerer katalytischer Aktivität aus einem ringförmigen Bereich an der Peripherie (2; Figur 2) des ersten Katalysators (4; Figur 4) bestehen.

5. Katalysatorsystem nach Anspruch 2,
**dadurch gekennzeichnet,**
**daß** die Bereiche mit geringerer katalytischer Aktivität aus einem Segment (2; Figur 3) oder Sektor des ersten Katalysators bestehen.

6. Katalysatorsystem nach den Ansprüchen 4 oder 5,
**dadurch gekennzeichnet,**
**daß** die Bereiche mit geringerer katalytischer Aktivität mit einem Adsorber für Kohlenwasserstoffe versehen sind.

7. Katalysatorsystem nach einem der Ansprüche 2 bis 6,
**dadurch gekennzeichnet,**
**daß** die Bereiche mit geringerer katalytischer Aktivität nur 0 bis 20 % der Konzentration an katalytisch aktiven Komponenten wie die übrigen Bereiche des Katalysators aufweisen.

## Claims

1. A catalytic converter system for purifying the exhaust gases from a diesel engine (2; Figure 4) comprising a first (4; Figure 4) and a second (6; Figure 4) catalytic converter, which are arranged in series in an exhaust gas purification system (1; Figure 4),
**characterised in that**
the two catalytic converters are reducing catalytic converters, the first of which (4; Figure 4) is arranged in the vicinity of the engine in a zone of the exhaust gas purification system in which the exhaust gas temperature at full engine load reaches temperatures of above 200 to above 300°C, and the second catalytic converter (6; Figure 4) is arranged remote from the engine, wherein the exhaust gas temperature at full engine load in this zone of the exhaust gas purification system remote from the engine lies within the temperature window of the second catalytic converter (6; Figure 4), and the maximum nitrogen oxide reduction of the first catalytic converter (4; Figure 4) is at lower temperatures than the maximum nitrogen oxide reduction of the second catalytic converter (6; Figure 4).

2. A catalytic converter system according to claim 1,
**characterised in that**
the first catalytic converter (4; Figure 4) comprises one or more zones with a lower catalytic activity than the remainder of the catalytic converter, which zones permit slippage of unconverted hydrocarbons and carbon monoxide at full engine load.

3. A catalytic converter system according to claim 2,
**characterised in that**
the zones with lower catalytic activity consist of a through-hole (2; Figure 1) arranged centrally in the first catalytic converter (4; Figure 4).

4. A catalytic converter system according to claim 2,
**characterised in that**
the zones with lower catalytic activity consist of an annular zone at the periphery (2; Figure 2) of the first catalytic converter (4; Figure 4).

5. A catalytic converter system according to claim 2,
**characterised in that**
the zones with lower catalytic activity consist of a segment (2; Figure 3) or sector of the first catalytic converter.

6. A catalytic converter system according to either one of claim 4 or claim 5,
**characterised in that**
the zones with lower catalytic activity are provided with an adsorbent for hydrocarbons.

7. A catalytic converter system according to any one of claims 2 to 6,
**characterised in that**
the zones with lower catalytic activity comprise only 0 to 20% of the concentration of catalytically active components relative to the remaining zones of the catalytic converter.

## Revendications

1. Système de catalyseur pour purifier les gaz d'échappement d'un moteur diesel (2 ; figure 4) constitué d'un premier catalyseur (4 ; figure 4) et d'un deuxième catalyseur (6 ; figure 4) disposés l'un derrière l'autre dans une installation de purification des gaz d'échappement (1 ; figure 4),
**caractérisé en ce que**
les deux catalyseurs sont des catalyseurs de réduction dont le premier (4 ; figure 4) est disposé près du moteur dans une zone de l'installation de purification des gaz d'échappement dans laquelle la température des gaz d'échappement, lorsque le moteur est à pleine charge, atteint des températures de plus de 200 à plus de 300 °C, et le deuxième catalyseur (6 ; figure 4) est disposé loin du moteur, la température des gaz d'échappement dans cette zone, éloignée du moteur, de l'installation de purification des gaz d'échappement se trouvant, lorsque le moteur tourne à pleine charge, dans la plage de température du deuxième catalyseur (6; figure 4), et le maximum de la réduction de l'oxyde d'azote du premier catalyseur (4 ; figure 4) se trouve à des températures plus basses que le maximum de la réduction de l'oxyde d'azote du deuxième catalyseur (6 ; figure 4).

2. Système de catalyseur selon la revendication 1,
**caractérisé en ce que**
le premier catalyseur (4 ; figure 4) présente une ou plusieurs zones ayant une activité catalytique plus faible que le reste du catalyseur qui permettent une fuite d'hydrocarbures et de monoxyde de carbone non convertis lorsque le moteur fonctionne à pleine charge.

3. Système de catalyseur selon la revendication 2,
**caractérisé en ce que**
les zones ayant une activité catalytique plus faible sont constituées d'un alésage débouchant (2 ; figure 1) disposé au centre du premier catalyseur (4 ; figure 4).

4. Système de catalyseur selon la revendication 2,
**caractérisé en ce que**
les zones ayant une activité catalytique plus faible sont constituées d'une zone annulaire à la périphérie (2 ; figure 2) du premier catalyseur (4; figure 4).

5. Système de catalyseur selon la revendication 2,
**caractérisé en ce que**
les zones ayant une activité catalytique plus faible sont constituées d'un segment (2 ; figure 3) ou d'un secteur du premier catalyseur.

6. Système de catalyseur selon les revendications 4 ou 5,
**caractérisé en ce que**
les zones ayant une activité catalytique plus faible sont munies d'un adsorbeur d'hydrocarbures.

7. Système de catalyseur selon l'une quelconque des revendication 2 à 6,
**caractérisé en ce que**
les zones ayant une activité catalytique plus faible ne présentent que 0 à 20 % de la concentration en composants à action catalytique des autres zones du catalyseur.
